Europäisches Patentamt

European Patent Office

Office européen des brevets

(11) Publication number: **0 139 822 B1**

# EUROPEAN PATENT SPECIFICATION

(45) Date of publication of patent specification: **11.03.92**   (51) Int. Cl.5: **B01D  27/06**, B01D  39/16

(21) Application number: **84105140.2**

(22) Date of filing: **07.05.84**

(54) **Filter element and its production.**

(30) Priority: **09.09.83 JP 167202/83**

(43) Date of publication of application:
**08.05.85 Bulletin  85/19**

(45) Publication of the grant of the patent:
**11.03.92 Bulletin  92/11**

(84) Designated Contracting States:
**DE FR GB IT**

(56) References cited:
**EP-A- 0 062 867
DE-A- 3 444 387
US-A- 3 457 339
US-A- 4 154 688
US-A- 4 392 958**

**PATENTS ABSTRACTS OF JAPAN, vol. 8, no.
156 (C-234)[1593], 19th July 1984; & JP-A-59
62 323**

**PATENTS ABSTRACTS OF JAPAN, vol. 7, no.
195 (C-183)[1340], 25th August 1983; & JP-
A-58 98 111**

(73) Proprietor: **Kurashiki Boseki Kabushiki Kaisha
7-1, Hommachi
Kurashiki-shi Okayama-ken(JP)**

(72) Inventor: **Miyagi, Tokuya
1-14-35, Katsuyama-kita
Ikuno-ku Osaka-shi Osaka-fu(JP)**
Inventor: **Inoue, Akihisa
3-53-402, Minamimachi
Gotenyama Hirakata-shi Osaka-fu(JP)**
Inventor: **Hamada, Katushi
1-10-22-403, Miigaoka
Neyagawa-shi Osaka-fu(JP)**
Inventor: **Fujimori, Shoichi
14-5, Shimokida-cho
Neyagawa-shi Osaka-fu(JP)**
Inventor: **Hori, Yoshihiro
747-14, Yokosuna
Shimizu-shi Shizuoka-ken(JP)**

(74) Representative: **Barz, Peter, Dr. et al
Patentanwälte Dr. V. Schmied-Kowarzik
Dipl.-Ing. G. Dannenberg Dr. P. Weinhold Dr.
D. Gudel Dipl.-Ing. S. Schubert Dr. P. Barz
Siegfriedstrasse 8
W-8000 München 40(DE)**

PATENTS ABSTRACTS OF JAPAN, vol. 6, no. 202 (C-129)[1080], 13th October 1982; & JP-A-57 110 310, & JAPANESE PATENTS GAZETTE, 29th September 1982, Derwent Publications, Week E33, abstract no. 69100; & JP-A-188 375

## Description

The present invention relates to a filter element made wholly of fluorocarbon resin and to the production of corresponding filter elements.

In recent years, super-clarification techniques for air, gases, water, chemicals, etc. based on the membrane separation techniques have made a remarkable progress and are widely used in various fields such as the fields of foods, semi-conductors and the like. Particularly, a chemicals clarification technique required for fine processing in the process for producing semi-conductor integrated circuits is behind in technical response,as compared with the clarification technique for air, gases, water, etc., and is recently attracting special attention. As one of the main reasons for that, while increasing the purity of chemicals is being required for attaining an improvement in the yield and quality of products, both semi-conductor integrated circuit manufacturers and chemicals suppliers are behind in their technical response, there is given delay in the development of filter products which show less metal leaching and good in resistance to chemicals. As filters which meet the above requirements at present, those made wholly of fluorocarbon resins are being required, and membrane filters of a multi-flat membrane system and a tubular form have been developed (cf. JP-A-58-98112). However, these filters have not yet come to satisfy the needs of the market, because both effective filter area and flow rate of filtration are so small that this causes problems in filtration of highly viscous chemicals and mass treatment.

On the other hand, a pleat-form filter element with fluorocarbon resin membranes has been developed (cf. "Gelman Sciences" catalogue, 1981 New Product Edition, Filtration Catalogue Supplement). This filter element has a large effective filter area as well as a fairly good resistance to chemicals, but because of the adhesion of fluorocarbon resin being very difficult in itself, parts other than the filter membrane are made of materials other than fluorocarbon resin which, however are not sufficient in terms of resistance to chemicals, temperature resistance and metal leaching.

Consequently, satisfactory products have not yet been obtained.

Further, a filter employed in the foregoing process for producing semi-conductor integrated circuits requires pores as fine as 0.01 to 10 $\mu$m. Also, the filter membrane itself is very low in strength, so that severe conditions cannot be employed on filter production, and besides the parts of the filter element must be assembled not only by mere adhesion, but by strong adhesion in a completely sealed state.

US-A-3 457 339 discloses the production of a tubular shape filter which has been rendered leakproof by applying a thermoplastic end cap the inner face whereof is fused to a filter sheet material formed into a tubular shape. However, in case that the end cap is a fluorocarbon resin, even if the inner face of the cap is fused at a temperature above the melting point, the fused resin cannot penetrate the pleats of filter because of its high viscosity.

Consequently, US-A-3 457 339 cannot be applied to a filter element made wholly of fluorocarbon resin.

EP-A-62867 discloses a tubular filter element comprising at least one layer of filter sheet material comprising glass fibers coated and bonded together by fluoroethylene polymer, having end portions of the tube sealed to end caps via a seal of thermoplastic fluoroethylene polymer material, and having the outer surfaces of the end portions of the filter sheet joined together through a self-supporting channel strip of thermoplastic fluoroethylene polymer material.

According to the present invention, the materials for the filter element are made wholly of fluorocarbon resin so that the problems of chemical resistance, temperature resistance and metal leaching etc. are not caused, and the fluorocarbon resins which have so far been regarded as difficult to weld together, are in a liquid-tightly welded state due to their special constitution.

Specific embodiments of the filter element as claimed are shown in the drawings, in which:

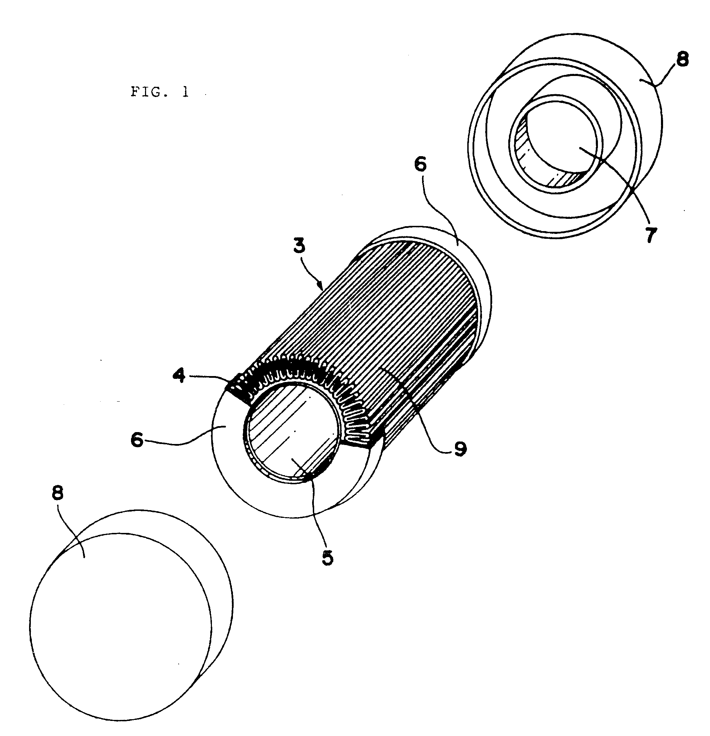

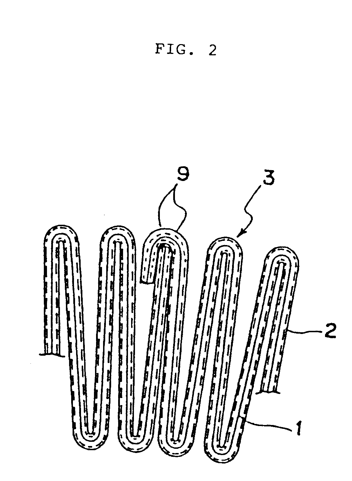

Fig. 1 is a typical view illustrating the filter element of the present invention (in the view, the filter material and the cap are shown separately). Figs. 2 to 4 are typical views illustrating ways of welding the edge portions of the both sides of the pleat.

The present invention, as shown in Figs. 1 and 2, provides a filter element made wholly of fluorocarbon resin and comprising as essential elements:

(a) a filter material (3) made of a sandwich-form sheet which has a pleated structure and is welded liquid-tight at the edge portions (9) of the two adjacent sides of said sheet, the sandwich-form sheet comprising a filter membrane (1) made of polytetrafluoroethylene and net supports (2) made of thermoplastic fluorocarbon resin and being present on both surfaces of said membrane (1);

(b) sealed end parts (6) consisting of two end portions (4) of the filter material (3) which have central openings (5) and are integrally and tightly welded with a thermoplastic fluorocarbon resin; and

(c) fluorocarbon resin caps (8) welded liquid-tight onto said sealed end parts (6).

In Fig. 1, the sealed end parts and the cap are separately shown for facilitating understanding.

Also provided is a method for producing a filter element made wholly of fluorocarbon resin,characterized by forming a sheet comprising a filter membrane made of a fluorocarbon resin and net supports made of thermoplastic fluorocarbon resin provided on the two surfaces thereof into a pleated structure, bending the pleated sheet into a cylindrical form, welding the edge portions of the two adjacent sides liquid-tight, prewelding the pleats by heating the two end portions of the cylindrical pleat-form filter to a temperature higher than the melting point of the net supports and then cooling said end portions, inserting the end portions having prewelded pleats into a molten thermoplastic fluorocarbon resin to force the resin into the pleats, whereby the end portions and the molten resin are integrally welded together, fitting fluorocarbon resin caps having a predetermined shape in said end parts and providing, if desired, a fluorocarbon resin core material for supporting the filter material inside the central opening of the resulting structure, and then integrally welding said two or three parts of the assembly thus obtained.

The filter element of the present invention is characterized in that the materials for the element are exclusively fluorocarbon resins, so that problems of chemical resistance, temperature resistance and leaching etc. are not caused; besides that,fluorocarbon resins which have so far been regarded as difficult to weld together, are in a liquid-tightly welded state due to their special constitution.

The filter membrane (1) used in the present invention is made of tetrafluoroethylene resin (hereinafter referred to as PTFE). It may be laminated with a porous reinforcing material made of a fluorocarbon resin. This membrane itself is well known as a filter membrane. Relating to the thickness of the membrane and the diameter of the pore, it suffices to optionally select them according to the kind of liquids to be treated and the object of filtration. Generally, however, membranes of 30 to 200 $\mu$m in thickness and 0.01 to 10 $\mu$m in pore diameter are used. This membrane is low in mechanical strength and easily deformed by filter pressure so that, in order to keep the pleat form, the membrane is used in the form of a sandwich in which fluorocarbon resin net supports are superimposed on the both surfaces of the membrane. Known filter membranes, for example membranes produced by welding a fluoroethylene polymer onto the surface of glass fibers, as described in JP-A-14919/1983, have an increased strength, but no fine pores. Besides, they are not sufficient in terms of resistance to chemicals, metal leaching etc., thus not meeting the object of the present invention. Such membranes, therefore, cannot be used.

The filter membrane of a fluorocarbon resin, especially PTFE, is placed between thermoplastic fluorocarbon resin net supports (2) in a sandwich form. These supports are spacers for the filter membrane to act effectively over the whole area of filtration, and at the same time, they prevent the membrane from getting deformed by filter pressure. Besides, they play an important role in ensuring the welding of the edge portions of the both sides of the membrane. PTFE, the material for the filter membrane, is very difficult to be thermally welded and very low in membrane strength, so that it is difficult to liquid-tightly weld the two end portions (4). This may be considered to be one of the reasons that cylindrical filter elements made wholly of fluorocarbon resin have not been provided so far.

As material for the net supports (2), there may be used thermoplastic fluorocarbon resins such as tetrafluoroethylene/perfluoroalkyl vinyl ether copolymer resin (hereinafter referred to as PFA), tetrafluoroethylene/hexafluoropropylene copolymer resin (hereinafter referred to as FEP), ethylene/tetrafluoroethylene copolymer resin (hereinafter referred to as ETFE), trifluorochloroethylene resin (hereinafter referred to as PCTFE), ethylene/trifluorochloroethylene copolymer resin (hereinafter referred to as ECTFE), fluorovinylidene resin (hereinafter referred to as PVdF), fluorovinyl resin (hereinafter referred to as PVF), tetrafluoroethylene/hexafluoropropylene/perfluoroalkyl vinyl ether terpolymer resin (hereinafter referred to as EPE) and the like. Particularly preferred ones are PFA, FEP and EPE in terms of chemical resistance and temperature resistance.

The net supports are present in the form of materials such as plain woven fabrics, welded non-woven fabrics, formed nets, knitting goods, punching sheets and the like of fluorocarbon resin fibers. Preferably, the supports have a flexibility such that they are not deformed easily by filter pressure. For this reason, supports of 0.1 to 1.0 mm in thickness and of about 0.1 to about 5 mm$^2$ in pore area are generally used.

The filter membrane is places between the net supports in a sandwich form, folded in pleats and welded liquid-tightly at the edge portions of both sides into a pleat-form cylinder. The filter membrane and the net supports may form a multi-layer structure (for example, support - membrane - support - membrane - support).

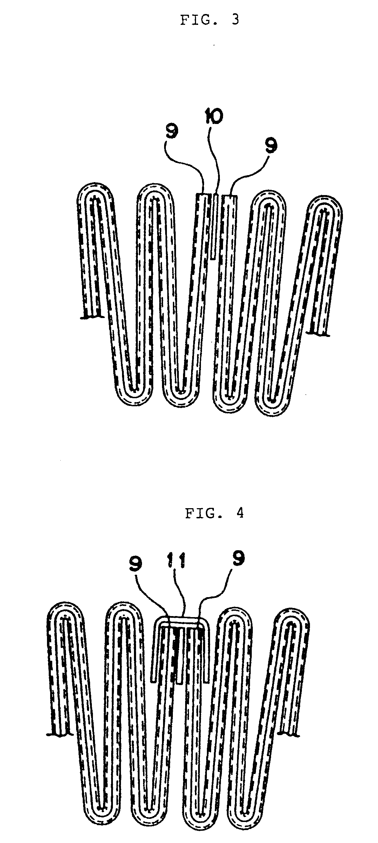

The edge parts (9) of both sides may be welded together, for example, by lengthening the edge part of one side of the sheet, externally covering the edge part of the other side with the lengthened edge part and integrally welding the two edge parts, as shown in Fig. 2; by placing a sealing tape (10) made of a thermoplastic fluorocarbon resin between said edge parts, followed by integrally welding, as shown in Fig. 3; or by covering the edge parts with a sealing cover (11) made of thermoplastic fluorocarbon resin, followed by integrally welding, as shown in Fig. 4. As said sealing tapes and sealing covers, PFA, FEP, EPE, etc. superior in chemicals resistance and weldability are preferred. Through the embodiments shown in Figs. 3 and 4, the pressure resistance of the seal is improved.

The filter material thus obtained is thoroughly heated, at both of its end portions (4), to a temperature higher than the melting point of the resin constituting the net support in order to pre-weld the pleats. This treatment is important as pre-treatment for the subsequent formation of sealed end parts by forcing a fluorocarbon resin into the pleats at the two end parts of the pleat-form filter to effect tight welding. As described later, the welding of the two end parts of the pleat-form filter is carried out by pressing said both parts into a mold containing a molten fluorocarbon resin. In this case, if the foregoing pre-welding of the pleats has been omitted, the pleats, because of the high viscosity of the molten fluorocarbon resin, buckle and thus make it impossible for the resin to enter the pleats. In other words, the filter membrane does not become embedded in the fluorocarbon resin. Consequently, only an incomplete seal is obtained, and the pressure resistance is also insufficient.

In the above pre-welding of the pleats, complete and integral welding of the whole pleats is not necessary, but it suffices to carry out the pre-welding to such a degree that the above problem occurring in the formation of sealed end parts can be avoided.

The filter material (3) thus obtained is welded as its two end portions (4) by embedding said end portions, except for an opening (5) for the passage of liquid, in a thermoplastic fluorocarbon resin. The welding is carried out by filling a circular mold which can receive the end part of the filter material with a sealing thermoplastic fluorocarbon resin, melting the resin by heating, and pressing the end portion into the molten resin to force the resin into the pleats. In this case, the heating is continued until said fluorocarbon resin enters the pleats, and the end portion of the filter material made of fluorocarbon resin is melted at at least the surface and welded with said entering fluorocarbon resin to form an integrated mass. As the thermoplastic fluorocarbon resin tor sealing, any of PFA, FEP, ETFE, PCTFE, ECTFE, PVdF, PVF, EPE, but not PTFE, may be used. PFA, FEP and EPE are particularly preferred in terms of chemical resistance. PTFE is inferior in weldability as well as high in viscosity on melting, so that pressing the end portion of the filter material into PTFE is difficult, and air bubbles remain in the pleats to cause leaks. Therefore, PTFE is not used for said purpose.

The sealed end part (6) is further welded with a cap (8) having a predetermined shape and, if desired, a porous hollow cylindrical core material (a passage for removing the filtrate) fit for the central opening (5) of the two end parts of the filter material.

For welding, various methods such as heat-welding, rotational welding, insert-injection, cylinder injection, etc. may be employed. In the case of heat-welding, the cap and core material having previously molded predetermined shapes, both of which are made of a fluorocarbon resin, are fitted to the sealed end part, and the assembly is inserted in a mold and heated to a temperature higher than the melting point of the fluorocarbon resin constituting the sealed end part, thereby liquid-tightly and completely welding the entire side surface and/or the entire bottom surface of the cap. Both of the caps to be welded with the two end parts (6) may have a central opening (7), or one of them may have a central opening and the other may be a cap having no central opening.

When the sealed end part is not formed beforehand, welding between the cap and the filter material is incomplete and a completely sealed filter element cannot be obtained.

The fluorocarbon resin used for the cap may be any of the foregoing fluorocarbon resins, but PTFE, FEP, PFA and EPE are preferred in terms of chemical resistance. More preferably, the same resins as used for sealing the end part are used in view of adhesiveness.

Also in the case of the core material, any of the foregoing fluorocarbon resins may be used, but in terms of chemical resistance and adhesiveness, PTFE, FEP, PFA and EPE are preferred. Particularly, the same resins as used for sealing the end parts are preferred.

With the filter element of the present invention, the outer surface of the filter material may be covered with a cylindrical protective jacket made of a fluorocarbon resin, if desired. This protective jacket may be made of a panel having a number of pores for a liquid to be treated to pass therethrough, and it does not always have to be integrally welded with the filter element. The jacket may be fitted to the inside of the cap, or to the outside of the cap.

The filter element of the present invention is made wholly of fluorocarbon resin and, therefore, is superior in chemical resistance, temperature resistance and does not cause problems of metal leaching, etc. Besides, it is possible to filter therewith a liquid to be treated containing contaminants as fine

as 0.1 $\mu$m and thus said filter element is particularly useful in clarifying chemicals, etc. used in a process for producing semi-conductor integrated circuits.

In the following the present invention will be illustrated by an example.

Example

A sandwich-form sheet comprising a PTFE filter membrane (thickness 60 $\mu$m; average pore diameter 0.22 $\mu$m; surface area 260 x 2200 mm$^2$) and EPE net supports (average thickness 0.3 mm; ratio of pore area, 50%, surface area 260 x 2200 mm$^2$) superimposed above and below said filter membrane, is formed into a 78-pleated sheet.

The edge portions of the two sides of the pleated sheet are placed one upon the other, and an EPE film (width 5 mm; length 260 mm; thickness 50 $\mu$m) is inserted between them (Fig. 3). The edge portions are then heat-welded by means of a commercially available impulse sealer to obtain a cylindrical pleat-form filter material (internal diameter 36 mm; largest external diameter 65 mm; length 260 mm). This heat-welded part has a completely liquid-tight seal.

The two end portions of this cylindrical pleat-form filter material are inserted by 15 mm each into a heating furnace, heat-treated at 350°C for 30 minutes, taken out and then cooled.

Separately from this, into a circular mold which fits the above heat-treated end potions there is inserted an EPE sheet (thickness 5 mm) of the same shape as that of the bottom of the mold, and the mold is heated to 320°C to melt the EPE sheet. Said heat-treated end portion is then inserted into the mold to force the molten resin into the pleats and is kept at 320°C for 15 minutes. Thereafter, the mold is cooled and the end part is taken out thereof. The sealed end part of the filter material obtained is in a state wherein the PTFE membrane is completely embedded in the EPE resin; moreover, the PTFE membrane and the EPE resin are integrally welded together, being resistant to high pressure.

An EPE porous cylindrical core material (external diameter 35 mm; internal diameter 30 mm; length 253 mm; number of pores 36 x 176) is inserted from end to end into the central opening of the end part-sealed filter material. An EPE end cap, which is a set with the core material, is then fitted in one end part. This assembly is placed in a mold, heated to 320°C for 40 minutes, cooled, and then taken out thereof. The other end part is also treated in the same manner.

The filter element thus obtained was liquid-tightly and strongly welded at the lateral edge portions of the pleat and the end parts as well as at the cap parts, there being no leaks, and, furthermore, it was resistant to high pressure.

## Claims

1. A filter element made wholly of fluorocarbon resin and comprising as essential elements:
   (a) a filter material (3) made of a sandwich-form sheet which has a pleated structure and is welded liquid-tight at the edge portions (9) of the two adjacent sides of said sheet, the sandwich-form sheet comprising a filter membrane (1) made of polytetrafluoroethylene and net supports (2) made of thermoplastic fluorocarbon resin and being present on both surfaces of said membrane (1);
   (b) sealed end parts (6) consisting of two end portions (4) of the filter material (3) which have central openings (5) and are integrally and tightly welded with a thermoplastic fluorocarbon resin; and
   (c) fluorocarbon resin caps (8) welded liquid-tight onto said sealed end parts (6).

2. A filter element as in claim 1, wherein the diameter of the fine pores of the filter membrane (1) is 0.01 to 10 $\mu$m.

3. A filter element as in any of claims 1 and 2, wherein the net support (2) is made of tetrafluoroethylene/perfluoroalkyl vinyl ether copolymer resin (PFA), tetrafluoroethylene/hexafluoropropylene copolymer resin (FEP) or tetrafluoroethylene/hexafluoropropylene/perfluoroalkyl vinyl ether terpolymer resin (EPE).

4. A filter element as in any of claims 1-3, wherein the resin for sealing the end portions (4) is PFA, FEP or EPE.

5. A filter element as in any of claims 1-4, wherein the cap (8) is made of PTFE, FEP, PFA or EPE.

6. A filter element as in any of claims 1-5, wherein the element is provided with an additional fluorocarbon resin core material for supporting the filter material (3).

7. A filter element as in any of claims 1-6, wherein the element is provided with an additional fluorocarbon resin protective jacket.

8. A method for producing a filter element made wholly of fluorocarbon resin, characterized by forming a sheet comprising a filter membrane made of a fluorocarbon resin and net supports made of thermoplastic fluorocarbon resin provided on the two surfaces thereof into a pleated structure, bending the pleated sheet into a cylindrical form, welding the edge portions of the two adjacent sides liquid-tight, prewelding the pleats by heating the two end portions of the cylindrical pleat-form filter to a temperature higher than the melting point of the net supports and then cooling said end portions, inserting the end portions having prewelded pleats into a molten thermoplastic fluorocarbon resin to force the resin into the pleats, whereby the end portions and the molten resin are integrally welded together, fitting fluorocarbon resin caps having a predetermined shape in said end parts and providing, if desired, a fluorocarbon resin core material for supporting the filter material inside the central opening of the resulting structure, and then integrally welding said two or three parts of the assembly thus obtained.

9. A method as in claim 8, wherein the edge portions of the two sides of the pleat-form filter are welded together by inserting a welded tape made of a thermoplastic fluorocarbon resin between said edge portions.

**Revendications**

1. Un élément filtrant constitué entièrement en résine fluorocarbonée et comprenant comme éléments essentiels :

   (a) un matériau filtrant (3) réalisé en une feuille en forme de sandwich qui a une structure plissée et qui est soudé de façon étanche aux liquides aux portions de bord (9) des deux côtés adjacents de ladite feuille, la feuille en forme de sandwich comprenant une membrane filtrante (1) en polytétrafluoroéthylène et des supports à mailles (2) en une résine fluorocarbonée thermoplastique, présents sur les deux surfaces de ladite membrane (1) ;

   (b) des parties terminales scellées (6) constituées de deux portions terminales (4) du matériau filtrant (3) qui ont des orifices centraux (5) et sont soudées de façon intégrale et étanche à la résine fluorocarbonée thermoplastique ; et

   (c) des capuchons en résine fluorocarbonée (8) soudés de façon étanche aux liquides sur lesdites parties terminales scellées (6).

2. Un élément filtrant selon la revendication 1, selon lequel le diamètre des pores fins de la membrane filtrante (1) est de 0,01 à 10 $\mu$m.

3. Un élément filtrant selon l'une quelconque des revendications 1 et 2, selon lequel le support à mailles (2) est en une résine de copolymère de tétrafluoroéthylène/perfluoroalkylvinyléther (PFA), une résine de copolymère de tétrafluoroéthylène/hexafluoropropylène (FEP) ou une résine terpolymère de tétrafluoroéthylène/hexafluoropropylène/perfluoroalkylvinyléther (EPE).

4. Un élément filtrant selon l'une des revendications 1 à 3, selon lequel la résine pour sceller les portions terminales (4) est du PFA, FEP ou EPE.

5. Un élément filtrant selon l'une quelconque des revendications 1 à 4, selon lequel le capuchon (8) est en PTFE, FEP, PFA ou EPE.

6. Un élément filtrant selon l'une quelconque des revendications 1 à 5, selon lequel l'élément est pourvu d'un matériau pour noyau en résine fluorocarbonée additionnelle pour supporter le matériau filtrant (3).

7. Un élément filtrant selon l'une quelconque des revendications 1 à 6, selon lequel l'élément est pourvu d'une chemise de protection en résine fluorocarbonée additionnelle.

8. Une méthode pour la production d'un élément filtrant constitué entièrement de résine fluorocarbonée, caractérisée en ce que l'on forme une feuille comprenant une membrane filtrante en une résine fluorocarbonée et des supports à mailles en résine fluorocarobonée thermoplastique, sur les deux surfaces de ladite membrane selon une structure plissée, on plie la feuille plissée selon une forme cylindrique, on soude les portions de bord des deux côtés adjacents d'une manière étanche aux liquides, on soude au préalable les plis par chauffage des deux portions terminales du filtre de forme plissée cylindrique à une température supérieure au point de fusion des supports à mailles et ensuite on refroidit lesdites portions terminales, on insère les portions terminales ayant les plis soudés au préalable dans une résine fluorocarbonée thermoplastique fondue pour forcer la résine dans les plis, de sorte que les portions terminales et la résine fondue sont soudées ensemble intégralement, on adapte des capuchons en résine fluorocarbonée ayant une forme prédéterminée dans lesdites parties terminales et on fournit, si on le désire, un matériau pour noyau en résine fluorocarbonée pour supporter le matériau filtrant à l'intérieur de l'orifice central de la structure résultante, et ensuite on soude intégralement ces deux ou trois parties de l'assemblage ainsi obtenues.

9. Une méthode selon la revendication 8, selon laquelle les portions de bord des deux côtés du filtre de forme plissée sont soudées ensemble par insertion d'une bande de soudage en une résine fluorocarbonée thermoplastique entre lesdites portions de bord.

**Patentansprüche**

1. Filterelement, das vollständig aus einem Fluorkohlenstoffharz hergestellt ist und als wesentliche Elemente umfaßt:

    (a) ein Filtermaterial (3), welches aus einem sandwichförmigen Blatt hergestellt ist, das eine gefaltete Struktur aufweist und an den Randbereichen (9) der zwei benachbarten Seiten des Blatts flüssigkeitsdicht verschweißt ist, wobei das sandwichförmige Blatt eine Filtermembran (1) aus Polytetrafluorethylen und Stütznetze (2) umfaßt, die aus thermoplastischem Fluorkohlenstoffharz hergestellt sind und auf beiden Oberflächen der Membran (1) vorhanden sind;

    (b) versiegelte Enden (6), die aus den zwei Endbereichen (4) des Filtermaterials (3) bestehen, welche zentrale Öffnungen (5) aufweisen und integral und dicht mit einem thermoplastischen Fluorkohlenstoffharz verschweißt sind; und

    (c) Fluorkohlenstoffharz-Kappen (8), die flüssigkeitsdicht auf die versiegelten Enden (6) geschweißt sind.

2. Filterelement nach Anspruch 1, worin der Durchmesser der Feinporen der Filtermembran (1) 0,01 bis 10 $\mu$m beträgt.

3. Filterelement nach irgendeinem der Ansprüche 1 oder 2, worin das Stütznetz (2) aus Tetrafluorethylen/Perfluoralkylvinylether-Copolymerharz (PFA) Tetrafluorethylen/Hexafluorpropylen-Copolymerharz (FEP) oder Tetrafluorethylen/Hexafluorpropylen/Perfluoralkylvinylether-Terpolymerharz (EPE) hergestellt ist.

4. Filterelement nach irgendeinem der Ansprüche 1 bis 3, worin das Harz zur Versiegelung der Endbereiche (4) PFA, FEP oder EPE ist.

5. Filterelement nach irgendeinem der Ansprüche 1 bis 4, worin die Kappe (8) aus PTFE, FEP, PFA oder EPE hergestellt ist.

6. Filterelement nach irgendeinem der Ansprüche 1 bis 5, worin das Element mit einem zusätzlichen Fluorkohlenstoffharz-Kernmaterial zur Stützung des Filtermaterials (3) versehen ist.

7. Filterelement nach irgendeinem der Ansprüche 1 bis 6, worin das Element mit einem zusätzlichen Fluorkohlenstoffharz-Schutzüberzug versehen ist.

8. Verfahren zur Herstellung eines Filterelements, das vollständig aus einem Fluorkohlenstoffharz hergestellt ist, dadurch gekennzeichnet, daß man ein Blatt, welches eine Filtermembran aus einem Fluorkohlenstoffharz und Stütznetze aus thermoplastischem Fluorkohlenstoffharz auf beiden Oberflächen davon umfaßt, in eine gefaltete Struktur bringt, das gefaltete Blatt in eine zylindrische Form biegt, die Randbereiche der beiden benachbarten Seiten flüssigkeitsdicht verschweißt, die Falten durch Erhitzen der zwei Endbereiche des zylindrischen, faltenförmigen Filters auf eine Temperatur, die höher als der Schmelzpunkt der Stütznetze ist, vorschweißt und anschließend die Endbereiche abkühlt, die Endbereiche mit den vorgeschweißten Falten in ein geschmolzenes thermoplastisches Fluorkohlenstoffharz einführt, um das Harz in die Falten zu zwingen, wodurch die Endbereiche und das geschmolzene Harz integral miteinander verschweißt werden, Fluorkohlenstoffharz-Kappen mit einer vorbestimmten Form in die Endbereiche einpaßt und gegebenenfalls die Zentralöffnung der resultierenden Struktur mit einem Fluorkohlenstoffharz-Kernmaterial zur Stützung des Filtermaterials versieht und dann die zwei oder drei Teile des so erhaltenen Aufbaus integral verschweißt.

9. Verfahren nach Anspruch 8, worin die Endbereiche der zwei Seiten des faltenförmigen Filters miteinander verschweißt werden, indem man einen geschweißten Streifen aus einem thermoplastischen Fluorkohlenstoffharz zwischen die Randbereiche einfügt.

FIG. 1

FIG. 2

FIG. 3

FIG. 4